# EUROPÄISCHE PATENTSCHRIFT

(11) **EP 3 586 596 B1**
(45) Veröffentlichungstag und Bekanntmachung des Hinweises auf die Patenterteilung: **22.11.2023**
(21) Anmeldenummer: 19186695.3
(22) Anmeldetag: 15.08.2016
(51) Int. Cl.: A01D 41/127

(54) **LANDWIRTSCHAFTLICHE ARBEITSMASCHINE**
AGRICULTURAL MACHINE
ENGIN DE TRAVAIL AGRICOLE

(30) Priorität: 07.12.2015 DE 102015121210
(43) Veröffentlichungstag der Anmeldung: 01.01.2020
(62) Teilanmeldung aus: 16184138.2
(73) Patentinhaber: CLAAS Selbstfahrende Erntemaschinen GmbH, 33428 Harsewinkel (DE)
(72) Erfinder: Baumgarten, Joachim, 48361 Beelen (DE); Wilken, Andreas, 49143 Bissendorf (DE); Heitmann, Christoph, 48231 Warendorf (DE); Bormann, Bastian, 33334 Gütersloh (DE); Bussmann, Christoph, 33428 Harsewinkel (DE); Schäfer, Klaus, 59302 Oelde (DE); Vöcking, Henner, 33397 Rietberg (DE); Berger, Arthur, 49143 Bissendorf (DE); Neu, Sebastian, 49196 Bad Laer (DE); Terörde, Stefan, 48231 Warendorf (DE)
(74) Vertreter: CLAAS Gruppe

(56) Entgegenhaltungen:
- EP-A1- 2 987 396
- EP-A2- 2 687 923
- EP-A2- 2 837 279
- EP-B1- 2 220 926
- WO-A1-2016/040960

## Beschreibung

Die Erfindung betrifft eine landwirtschaftliche Arbeitsmaschine mit den Merkmalen des Oberbegriffs von Anspruch 1 sowie ein Verfahren für die Ansteuerung einer landwirtschaftlichen Arbeitsmaschine mit den Merkmalen des Oberbegriffs von Anspruch 12.

Bei der in Rede stehenden landwirtschaftlichen Arbeitsmaschine kann es sich um jedwede landwirtschaftliche Arbeitsmaschine handeln, die der Abarbeitung eines landwirtschaftlichen Arbeitsprozesses dient und die mit mehreren Arbeitsorganen sowie mit einem Fahrerassistenzsystem zur Ansteuerung der Arbeitsorgane ausgestattet ist. Dazu gehören beispielsweise Zugmaschinen, insbesondere Traktoren, selbstfahrende Erntemaschinen, insbesondere Feldhäcksler, Mähdrescher o. dgl.. Vorliegend steht die als Mähdrescher ausgestaltete Arbeitsmaschine im Vordergrund.

Eine als Mähdrescher ausgestaltete Arbeitsmaschine dient der Mahd und dem Drusch von Körnerfrüchten. Dabei erfolgt der Drusch durch ein Dreschwerk, welches aus dem von dem Mähdrescher durch das Schneidwerk aufgenommenen Erntegut Korngut gewinnt, das nach dem Dreschen einer Abscheidung und einer anschließenden Reinigung einem Korntank zugeführt wird. Als weitere Bestandteile des Ernteguts bleiben weiter z.B. die Spreu und das Stroh übrig, welche entweder über das Feld verteilt oder - im Falle des Strohs - auf Schwad z.B. zur späteren Aufnahme durch eine Ballenpresse gelegt werden können. Hier und nachfolgend ist unter dem Begriff "Erntegut" der gesamte vom Dreschwerk aufgenommene Gutstrom zu verstehen, also einschließlich derjenigen Körner, welche noch nicht als Korngut aus dem Erntegut gewonnen wurden, und den Körnern, welche ggf. in dem Erntegutstrom als Verlust verbleiben und mit dem Stroh abgelegt werden.

Im Dreschwerk wird das Korn durch eine im Prinzip wälzende Bearbeitung aus dem Stroh gerieben - ausgedroschen - und vom übrigen Erntegutsstrom getrennt, so dass es direkt der Reinigung zugeführt werden kann. Der übrig gebliebene Erntegutstrom wird dann dem Abscheidebereich zugeführt, in welchem z.B. durch eine Schüttleranordnung das verbliebene Korn von dem Erntegutstrom getrennt und danach ebenfalls der Reinigung zugeführt wird.

Es gibt nun eine ganze Reihe von Qualitätskriterien, anhand derer die Güte des Arbeitsprozesses, hier des Ernteprozesses, beurteilt werden kann. Erstens sollen möglichst alle Körner aus dem Erntegutstrom entfernt und dem Korntank zugeführt werden, und zwar mit möglichst wenig gebrochenen Körnern - Bruchkörnern - und einem geringen Nichtkornanteil im Korngut. Zweitens soll ggf. auch das Stroh nicht so stark zerstört und z.B. zerschnitten werden, dass die spätere Verwertung erschwert wird. Drittens soll die für die Bearbeitung eines Feldes benötigte Zeit kurz oder der dabei verbrauchte Kraftstoff möglichst gering gehalten werden. Weitere Qualitätskriterien sind hier denkbar. In Abhängigkeit von der Gesamtsituation, insbesondere von den jeweiligen wirtschaftlichen Rahmenbedingungen, stehen unterschiedliche Qualitätskriterien im Vordergrund, die sich zu einer Arbeitsprozessstrategie, hier eine Ernteprozessstrategie, für die Durchführung des Arbeitsprozesses, hier des Ernteprozesses, zusammensetzen.

Die Erfüllung der obigen Gütekriterien setzt voraus, dass das Dreschwerk und die anderen Arbeitsorgane des Mähdreschers auf bestimmte Art und Weise angesteuert werden. Hierfür ist ein Fahrerassistenzsystem vorgesehen, das die Ansteuerung der Arbeitsorgane nach mindestens einer benutzerseitig vorgebbaren Arbeitsprozessstrategie, die auf die Erfüllung mindestens eines Qualitätskriteriums gerichtet ist, vornimmt.

Die bekannte landwirtschaftliche Arbeitsmaschine (EP 2 220 926 B1), von der die Erfindung ausgeht, zeigt ein solches Fahrerassistenzsystem. Das Fahrerassistenzsystem weist eine grafische Benutzerschnittstelle auf, über die zumindest ein Teil der Arbeitsprozessstrategie benutzerseitig vorgebbar ist. Hierfür kann der Benutzer über einen natürlich-sprachigen Kommunikationsablauf die gewünschten Qualitätskriterien der Arbeitsprozessstrategie vorgeben. Sofern der Benutzer miteinander konkurrierende Qualitätskriterien vorgibt, die sich nicht gleichzeitig erfüllen lassen, reagiert das Fahrerassistenzsystem vorzugsweise mit einem entsprechenden Warnhinweis.

Die bekannte landwirtschaftliche Arbeitsmaschine ermöglicht mit ihrem Fahrerassistenzsystem eine intuitive Eingabe der Arbeitsprozessstrategie in mehreren Schritten. Nachteilig ist die Tatsache, dass die Vorgabe mit einander konkurrierender Qualitätskriterien zu zusätzlichen Eingabeschritten führen kann, sofern der Benutzer eine Vorgabe von konkurrierenden Qualitätskriterien trifft, die nicht gleichzeitig erfüllbar sind.

Weiter ist aus der nichtvorveröffentlichten EP 2 987 396 ein dreieckförmiges virtuelles Einstellelement bekannt geworden, mittels dessen Effizienz, Qualität und Produktivität einer landwirtschaftlichen Erntemaschine in Abhängigkeit voneinander visualisierbar sind. Eine derartig strukturierte Einstelleinrichtung hat insbesondere den Nachteil, dass der Bediener nicht direkt die wesentlichen, die Wirkungsweise des Mähdreschers beeinflussenden Qualitätsparameter editieren kann. Zudem erhält der Bediener hier keinerlei Informationen darüber wie sich die Qualitätsparameter eines Druschprozesses wechselweise beeinflussen.

Der Erfindung liegt das Problem zugrunde, die bekannte landwirtschaftliche Arbeitsmaschine derart auszugestalten und weiterzubilden, dass die benutzerseitige Vorgabe der Arbeitsprozessstrategie vereinfacht wird.

Das obige Problem wird bei einer landwirtschaftlichen Arbeitsmaschine gemäß dem Oberbegriff von Anspruch 1 durch die Merkmale des kennzeichnenden Teils von Anspruch 1 gelöst.

Wesentlich ist die grundsätzliche Überlegung, dass konkurrierende Qualitätskriterien, die an sich nicht gleichzeitig erfüllt werden können, gemäß einer Gewichtungsvariable zueinander gewichtet in die Arbeitsprozessstrategie eingehen, wobei die Gewichtungsvariable über ein virtuelles Bedienelement der grafischen Benutzerschnittstelle visualisiert wird und benutzerseitig vorgebbar ist. Der Benutzer wird damit zwar grundsätzlich in der Vorgabe der Qualitätskriterien beschränkt, da die Veränderung der Gewichtungsvariable stets mit einer gegenläufigen Veränderung der Gewichtung der konkurrierenden Qualitätskriterien einhergeht. Allerdings ist dies ja auch sachgerecht, da miteinander konkurrierende Qualitätskriterien ohnehin nicht gleichzeitig erfüllt werden können. Im Ergebnis entfällt der im Stand der Technik erforderliche Warnhinweis bei einer Vorgabe von Qualitätskriterien, die in der Praxis nicht umsetzbar ist. Dies führt alles in allem zu einer Verkürzung der benutzerseitigen Vorgabe der Arbeitsprozessstrategie.

Grundsätzlich können mehrere Gewichtungsvariablen vorgesehen sein, denen jeweils konkurrierende Qualitätskriterien zugeordnet sind. Bei der besonders bevorzugten Ausgestaltung sind die konkurrierenden Qualitätskriterien paarweise jeweils einer Gewichtungsvariable zugeordnet. Grundsätzlich ist es aber auch denkbar, dass einer Gewichtungsvariable mehrere Qualitätskriterien, , zugeordnet sind, die zum Teil miteinander konkurrieren.

Die besonders bevorzugten Ausgestaltungen gemäß Anspruch 3 führt zu einer besonders komfortablen Vorgabe der jeweiligen Gewichtungsvariable. Die Verstellung erfolgt hier und vorzugsweise über eine Drag-and-drop-Bedienung. Hierfür ist die grafische Benutzerschnittstelle vorzugsweise als Touch-Screen ausgestaltet.

Die weiter bevorzugten Ausgestaltungen gemäß den Ansprüchen 5 bis 8 betreffen die Anwendung der vorschlagsgemäßen Lehre auf eine als Mähdrescher ausgestaltete Arbeitsmaschine. Bei einem Mähdrescher ergibt sich eine Mehrzahl von Qualitätskriterien, die miteinander konkurrieren. Ein Beispiel hierfür ist das Qualitätskriterium der Maximierung des Ausdruschs, der durch eine aggressive Ansteuerung des Dreschwerks erzielbar ist. Eine solche aggressive Ansteuerung ist aber gleichzeitig mit dem grundsätzlichen Risiko einer Erhöhung des Bruchkornanteils verbunden. Damit handelt es sich bei den Qualitätskriterien der Maximierung des Ausdruschs und der Minimierung des Bruchkornanteils um zwei miteinander konkurrierende Qualitätskriterien im obigen Sinne.

Bei der besonders bevorzugten Ausgestaltung gemäß Anspruch 9 sorgt das Fahrerassistenzsystem für eine Anpassung der grafischen Benutzerschnittstelle an die Maschinenkonfiguration und/oder die Steuerungskonfiguration und/oder den Arbeitsprozesszustand. Je nach aktueller Konstellation visualisiert das Fahrerassistenzsystem unterschiedliche miteinander konkurrierende Qualitätskriterien, so dass durch den Benutzer nur die Qualitätskriterien vorgebbar sind, die für die jeweils aktuelle Konstellation relevant sind.

Nach einer weiteren Lehre gemäß Anspruch 12, der eigenständige Bedeutung zukommt, wird ein Verfahren für die Ansteuerung der vorschlagsgemäßen landwirtschaftlichen Arbeitsmaschine als solches beansprucht.

Wesentlich nach dem vorschlagsgemäßen Verfahren ist, dass konkurrierende Qualitätskriterien gemäß der Gewichtungsvariable zueinander gewichtet in die Arbeitsprozessstrategie eingehen und dass die Gewichtungsvariable über ein virtuelles Bedienelement der grafischen Benutzerschnittstelle visualisiert wird und benutzerseitig vorgegeben wird. Zur Erläuterung des vorschlagsgemäßen Verfahrens darf auf alle Ausführungen zu der vorschlagsgemäßen landwirtschaftlichen Arbeitsmaschine verwiesen werden.

Im Folgenden wird die Erfindung anhand einer lediglich Ausführungsbeispiele darstellenden Zeichnung näher erläutert. In der Zeichnung zeigt
- Fig. 1: eine vorschlagsgemäße landwirtschaftliche Arbeitsmaschine in einer ganz schematischen Darstellung,
- Fig. 2: eine schematische Darstellung eines Fahrerassistenzsystems der Arbeitsmaschine gemäß Fig. 1,
- Fig. 3: eine grafische Benutzerschnittstelle des Fahrerassistenzsystems gemäß Fig. 2 und

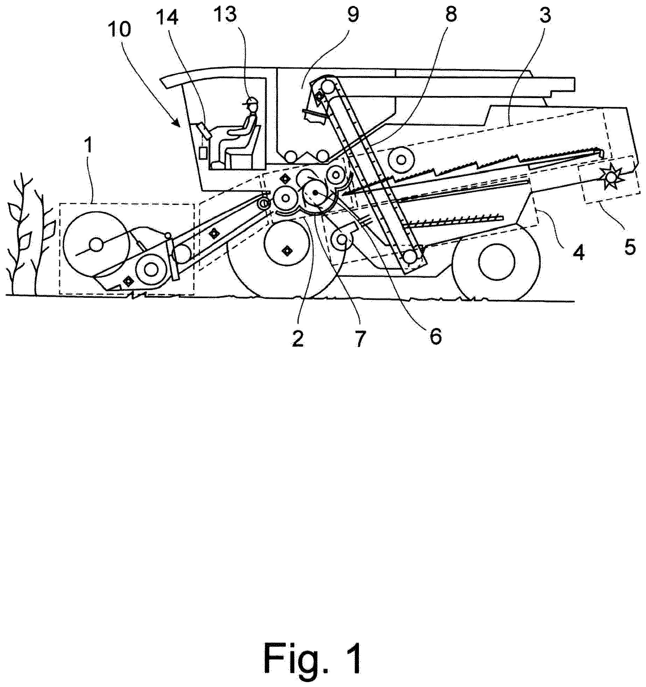

Die in Fig. 1 dargestellte landwirtschaftliche Arbeitsmaschine dient der Abarbeitung eines landwirtschaftlichen Arbeitsprozesses. Hier und vorzugsweise handelt es sich bei der Arbeitsmaschine um einen Mähdrescher, welcher der Abarbeitung eines Ernteprozesses dient. Die vorschlagsgemäße Lösung ist auf alle anderen, im einleitenden Teil genannten landwirtschaftlichen Arbeitsmaschinen anwendbar. Alle folgenden Ausführungen betreffen fast durchweg eine als Mähdrescher ausgestaltete Arbeitsmaschine. Diese Ausführungen gelten für alle anderen Arten von landwirtschaftlichen Arbeitsmaschinen entsprechend.

Die dargestellte Arbeitsmaschine weist die Arbeitsorgane Schneidwerk 1, Dreschwerk 2, Abscheideanordnung 3, Reinigungsanordnung 4 und Verteilanordnung 5 auf.

Während das Schneidwerk 1 dem Schneiden und der Aufnahme des Ernteguts dient, kommt dem Dreschwerk 2 die Aufgabe des Dreschens des aufgenommenen Ernteguts zu Korngut zu. Unter dem Erntegut ist dabei das gesamte vom Feldbestand aufgenommene und dem Dreschwerk 2 zugeführte Material zu verstehen, wobei das Korngut dann die von dem Mähdrescher aus dem Erntegut zu gewinnenden Körner bezeichnet.

Das Dreschwerk 2 ist mit einer Dreschtrommel 6 ausgestattet, die mit einem Dreschkorb 7 zusammenwirkt. Der dem Dreschwerk 2 zugeführte Erntegutstrom wird im Anschluss - ohne das bereits hier gewonnene Korngut - der Abscheideanordnung 3 zugeführt.

Grundsätzlich dient das Dreschwerk 2 zum Ausreiben des überwiegenden Teils des Kornguts aus dem Erntegut durch den Dreschvorgang. In der Abscheideanordnung 3 wird dann das Erntegut mit dem in ihm verbliebenen Kornanteil so bewegt, z.B. geschüttelt, dass auch das verbliebene Korngut möglichst aus dem Stroh und dem sonstigen Erntegut herausgetrennt wird. Das im Dreschwerk 2 und der Abscheideanordnung 3 gewonnene Korngut wird dann einer Reinigungsanordnung 4 zugeführt. In der Reinigungsanordnung 4, welche regelmäßig mehrstufig ist, werden dann noch bis hierher im Korngut mitgeführte Nichtkornbestandteile, z. B. Spreu und Strohteile, sowie unausgedroschenes Material, wie etwa Ährenspitzen oder Grannen, von dem Korngut getrennt. Anschließend gelangt das gereinigte Korngut über eine Transportanordnung 8, z.B. einen Kornelevator, in einen Korntank 9. Das ausgedroschene Stroh - also das verbliebene Erntegut in der Abscheideanordnung 3 - wird von dem Mähdrescher abgelegt, z. B. als Schwad entlang der Fahrspur.

Ein obiges Dreschwerk 2 kann durch die Vorgabe verschiedener Maschinenparameter angesteuert werden. Hierunter fallen in Abhängigkeit vom Aufbau des Dreschwerks 2 Antriebsparameter, wie beispielsweise eine Trommeldrehzahl oder sonstige Bewegungskennzahlen der Dreschtrommel sowie eine Korbweite - also der Abstand zwischen der Dreschtrommel 6 und dem Dreschkorb 7. Sofern das Dreschwerk 2 Entgrannerklappen aufweist, können auch diese im Rahmen der Ansteuerung des Dreschwerks 2 verstellt werden.

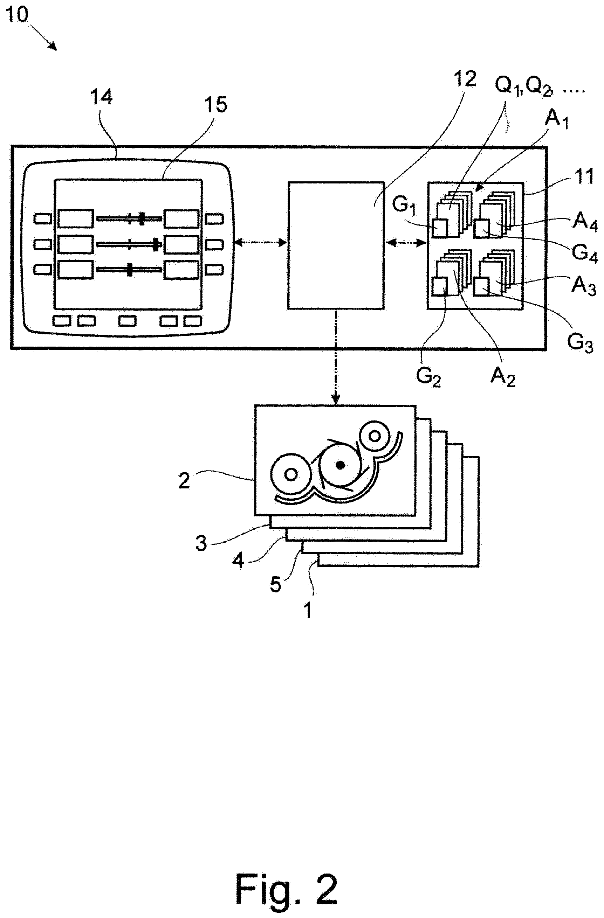

Die vorschlagsgemäße Arbeitsmaschine weist ferner ein Fahrerassistenzsystem 10 zur Ansteuerung der Arbeitsorgane 1-5 auf. Dieses Fahrerassistenzsystem 10 umfasst einen Speicher 11 zum Hinterlegen von Daten - also einen Speicher im informationstechnischen Sinne - und eine Rechenvorrichtung 12 zur Verarbeitung der in dem Speicher 11 hinterlegten Daten. Grundsätzlich ist das Fahrerassistenzsystem 10 dazu eingerichtet, einen Benutzer 13 der Arbeitsmaschine bei der Bedienung der Arbeitsmaschine zu unterstützen. Das Fahrerassistenzsystem 10 mit dem Speicher 11 und der Rechenvorrichtung 12 ist schematisch in Fig. 2 gezeigt.

Das Fahrerassistenzsystem 10 steuert die Arbeitsorgane 1-5 nach mindestens einer benutzerseitig vorgebbaren Arbeitsprozessstrategie A an. Die Arbeitsprozessstrategie A ist auf die Erfüllung mindestens eines Qualitätskriteriums Q gerichtet. Am Beispiel des Mähdreschers handelt es sich bei den Qualitätskriterien Q vorzugsweise um die Zielvorgabe der Einstellung oder der Optimierung mindestens eines Ernteprozessparameters wie "Ausdrusch", "Bruchkornanteil", "Abscheideverluste", "Reinigungsverluste", "Schlupf Dreschwerk-Antrieb", "Kraftstoffverbrauch" o. dgl.. Die Umsetzung der Arbeitsprozessstrategie A erfolgt dabei am Beispiel des Dreschwerks 2 in erster Linie durch die Vorgabe der Dreschwerksparameter "Trommeldrehzahl" und "Korbweite".

Für die Umsetzung der Arbeitsprozessstrategie A mittels der Rechenvorrichtung 12 ist in dem Speicher 11 mindestens eine Umsetzungsvorschrift hinterlegt. Für die Umsetzungsvorschrift sind verschiedene vorteilhafte Varianten denkbar. In einer ersten Variante ist es vorgesehen, dass eine Umsetzungsvorschrift die Ermittlung der Maschinenparameter in einem Steuervorgang, und nicht in einem Regelungsvorgang, umsetzt.

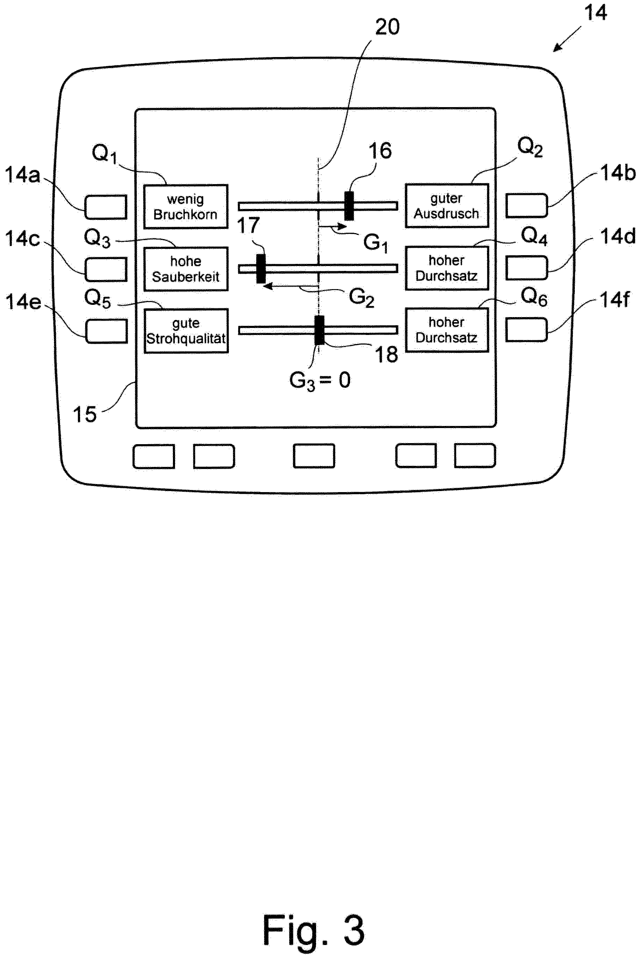

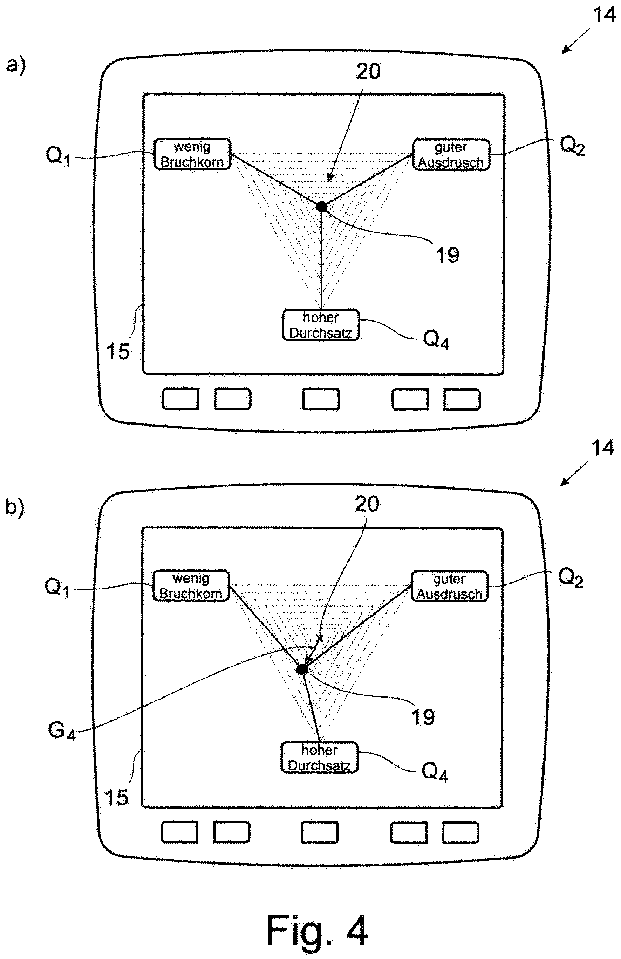

Das Fahrerassistenzsystem 10 ist vorschlagsgemäß mit einer grafischen Benutzerschnittstelle 14 mit einem Display 15 ausgestattet, über die zumindest ein Teil der Arbeitsprozessstrategie A benutzerseitig vorgebbar ist. In besonders bevorzugter Ausgestaltung handelt es sich bei der grafischen Benutzerschnittstelle 14 um einen Touch-Screen. Eine bevorzugte Ausgestaltung der grafischen Benutzerschnittstelle 14 ist in den Fig. 3 und 4 gezeigt.

Wesentlich für die vorschlagsgemäße Lehre ist eine spezielle Berücksichtigung konkurrierender Qualitätskriterien Q, die Bestandteil der benutzerseitig vorgebbaren Arbeitsprozessstrategie A sind. Der Begriff "konkurrierend" ist im Hinblick auf zwei Qualitätskriterien Q so zu verstehen, dass die Erfüllung des einen Qualitätskriteriums Q der Erfüllung des anderen Qualitätskriteriums Q entgegenwirkt und umgekehrt. Eine Ansteuerung der Arbeitsorgane 1-5, die auf die Erfüllung beider Qualitätskriterien Q gerichtet ist, lässt sich bei derart konkurrierenden Qualitätskriterien Q nicht umsetzen. Eine Lösung zur sachgerechten Behandlung konkurrierender Qualitätskriterien Q besteht darin, dass den konkurrierenden Qualitätskriterien Q eine Gewichtungsvariable G zugeordnet ist, die eine Gewichtung der konkurrierenden Qualitätskriterien Q zueinander repräsentiert. Gemäß dieser Gewichtung, also gemäß dieser Gewichtungsvariable G, gehen die konkurrierenden Qualitätskriterien Q entsprechend zueinander gewichtet in die Arbeitsprozessstrategie A ein. Das Fahrerassistenzsystem 10 weist dem Qualitätskriterium Q mit der höheren Gewichtung bei der Ansteuerung der Arbeitsorgane 1-5 eine höhere Priorität zu als einem Qualitätskriterium Q mit einer geringeren Gewichtung.

Interessant ist nun, dass die den konkurrierenden Qualitätskriterien Q zugeordnete Gewichtungsvariable G über ein virtuelles Bedienelement 16-19 der grafischen Benutzerschnittstelle 14 visualisiert und benutzerseitig vorgebbar ist. Dies ist der Darstellung gemäß Fig. 3 zu entnehmen. Es lässt sich der Darstellung gemäß Fig. 3 entnehmen, dass sich die Gewichtungsvariable G durch das dortige, als Schiebesteller ausgestaltete Bedienelement 16-19 visualisieren und verstellen lässt. Dabei ist es hier und vorzugsweise so, dass dem Bedienelement 16-19 eine Mittelstellung zugeordnet ist, die eine ausgeglichene Berücksichtigung der miteinander konkurrierenden Qualitätskriterien Q repräsentiert. Die Mittelstellung ist in Fig. 3 mit dem Bezugszeichen 20 angedeutet. Eine Auslenkung des Bedienelements 16-19 von der Mittelstellung 20 entspricht einer entsprechenden Änderung der Gewichtungsvariable G.

Bei dem in Fig. 2 dargestellten und insoweit bevorzugten Ausführungsbeispiel ist es so, dass paarweise konkurrierenden Qualitätskriterien Q_{1,} Q₂; Q₃, Q₄; Q₅, Q₆ jeweils paarweise eine Gewichtungsvariable G₁, G₂, G₃ zugeordnet ist. Die jeweilige Gewichtungsvariable G₁, G₂, G₃ wird, wie in Fig. 3 dargestellt, über ein virtuelles Bedienelement 16-19 der grafischen Benutzerschnittstelle 14 visualisiert und ist entsprechend benutzerseitig vorgebbar. Grundsätzlich kann es aber auch vorgesehen sein, dass einer beliebigen Gruppe von konkurrierenden Qualitätskriterien Q eine Gewichtungsvariable G zugeordnet ist, die wie oben vorgeschlagen visualisierbar und entsprechend benutzerseitig vorgebbar ist. Für eine Gruppe aus drei Qualitätskriterien ist dies in Fig. 4 dargestellt.

Es ergibt sich aus einer Zusammenschau der Fig. 3 und 4, dass die Gewichtungsvariable G in ganz unterschiedlicher Weise definiert sein kann. Bei den in Fig. 3 dargestellten Gewichtungsvariablen G₁, G₂, G₃ ist der jeweiligen Gewichtungsvariable G vorzugsweise ein einziger Wert zugeordnet. Bei dem in Fig. 4 dargestellten Ausführungsbeispiel dagegen kann es sich bei der Gewichtungsvariable G um einen Zeiger handeln, der von der Mittelstellung 20 ausgeht. Entsprechend ist die Gewichtungsvariable G beispielsweise definiert durch einen Winkel, der die Richtung des Zeigers angibt, und einen Betrag, der die Länge des Zeigers angeht.

Für die benutzerseitige Vorgabe der Gewichtungsvariablen G ist es hier und vorzugsweise vorgesehen, dass die Gewichtungsvariable G über das virtuelle Bedienelement 16-18 mittels Drag-and-Drop-Bedienung verstellbar ist. Hierfür ist es vorzugsweise vorgesehen, dass das Display 15 als Touch-Screen ausgestaltet ist. Alternativ kann es aber auch vorgesehen sein, dass die Bedienelemente 16-18 über die Tasten 14a-f verstellbar sind, die in besonders bevorzugter Ausgestaltung als Soft-Keys Verwendung finden.

Wie oben angedeutet, ist das jeweilige Bedienelement 16-18 über die grafische Benutzerschnittstelle 14 vorzugsweise als virtueller Schiebesteller visualisiert. Alternativ dazu kann es vorgesehen sein, dass das Bedienelement 16-18 als virtueller Drehsteller visualisiert ist.

Ganz allgemein ist es vorzugsweise vorgesehen, dass die benutzerseitige Verstellung des Bedienelements 16 proportional zu der Veränderung der jeweiligen Gewichtungsvariable G ist. Für die dargestellten Ausführungsbeispiele, bei denen sich das jeweilige Bedienelement 16-18 aus einer Mittelstellung 20 heraus verstellen lässt, bedeutet dies, dass die Entfernung des Bedienelements 16-18 von der Mittelstellung 20 proportional zu der Veränderung der Gewichtungsvariable G ist.

Der Definition des jeweiligen Qualitätskriteriums Q kommt vorliegend besondere Bedeutung zu. Hier und vorzugsweise ist jedes Qualitätskriterium Q ganz allgemein durch eine Zielvorgabe der Optimierung oder der Einstellung eines Arbeitsprozessparameters definiert. Der Begriff "Optimierung" kann im einfachsten Fall die Maximierung oder Minimierung des jeweiligen Arbeitsprozessparameters umfassen. Der Begriff "Einstellung" bedeutet, dass der jeweilige Arbeitsprozessparameter einen speziellen Wert einnehmen soll.

Bei einer als Mähdrescher ausgestalteten Arbeitsmaschine ergeben sich eine Reihe von konkurrierenden Qualitätskriterien Q, da die in einem Mähdrescher ablaufenden Prozesse in großem Maße voneinander abhängig sind.

Ein erstes Beispiel für zwei konkurrierende Qualitätskriterien Q_{1,} Q₂ sind die Einstellung oder Optimierung der Arbeitsprozessparameter "Bruchkornanteil" und "Ausdrusch". Im Einzelnen ist es hier und vorzugsweise so, dass es sich bei den konkurrierenden Qualitätskriterien Q_{1,} Q₂ hier um die Minimierung des Arbeitsprozessparameters "Bruchkornanteil" und die Maximierung des Arbeitsprozessparameters "Ausdrusch" handelt. Diesem Paar konkurrierender Qualitätskriterien Q_{1,} Q₂ ist das Bedienelement 16 zugeordnet, das in Fig. 3 aus einer Mittelstellung 20 heraus zum Arbeitsprozessparameter "Bruchkornanteil" hin oder dem Arbeitsprozessparameter "Ausdrusch" hin verstellbar ist. Durch diese Verstellung des Bedienelements 16 lässt sich die zugeordnete Gewichtungsvariable G₁ und damit die Gewichtung des betreffenden Qualitätskriteriums Q_{1,} Q₂ entsprechend vorgeben. Wie oben angesprochen, lässt sich der Ausdrusch durch eine aggressivere Ansteuerung insbesondere des Dreschwerks 2, beispielsweise durch Erhöhung der Trommeldrehzahl, erhöhen, was allerdings zu Lasten der Zielvorgabe der Minimierung des Arbeitsprozessparameters "Bruchkornanteil" geht.

Zwei weitere konkurrierende Qualitätskriterien Q₃, Q₄ sind die Einstellung oder Optimierung der Arbeitsprozessparameter "Durchsatz" einerseits und "Sauberkeit" andererseits. Im Einzelnen sind die zwei konkurrierenden Qualitätskriterien Q₃, Q₄ hier die Maximierung des Arbeitsprozessparameters "Durchsatz" und des Arbeitsprozessparameters "Sauberkeit". Der Erhöhung des Durchsatzes geht regelmäßig eine Reduzierung der Sauberkeit, also einer Erhöhung der Nichtkornbestandteile, einher, so dass es sich bei den hier gegenüberstehenden Qualitätskriterien Q₃, Q₄ um konkurrierende Qualitätskriterien im obigen Sinne handelt.

Zwei weitere konkurrierende Qualitätskriterien Q₅, Q₆ entsprechen der Einstellung oder Optimierung der Arbeitsprozessparameter "Durchsatz" und "Strohqualität". Im Einzelnen sind die zwei konkurrierenden Qualitätskriterien Q₅, Q₆ hier die Maximierung des Arbeitsprozessparameters "Durchsatz" und die Maximierung des Arbeitsprozessparameters "Strohqualität". Mit der Erhöhung des Durchsatzes geht regelmäßig eine Verungleichmäßigung des Strohs, also eine Reduzierung der Strohqualität einher, so dass es sich auch insoweit um miteinander konkurrierende Qualitätskriterien Q₅, Q₆ handelt.

Zwei weitere, nicht dargestellte, konkurrierende Qualitätskriterien entsprechen der Einstellung oder Optimierung des Arbeitsprozessparameters "Durchsatz" und des Arbeitsprozessparameters "Verluste", insbesondere "Abscheideverluste" und/oder "Reinigungsverluste". Im Einzelnen sind die zwei konkurrierenden Qualitätskriterien hier die Maximierung des Arbeitsprozessparameters "Durchsatz" und die Minimierung des Arbeitsprozessparameters "Verluste". Mit der Erhöhung des Durchsatzes geht jedenfalls theoretisch eine Erhöhung der Verluste einher. Entsprechend kann in Fig. 3 grundsätzlich mindestens ein weiteres Bedienelement 16, 17, 18 vorgesehen sein.

Grundsätzlich können mehrere Arbeitsprozeßparameter in einem Qualitätskriterium zusammengefasst werden, um die Vorgabe der Arbeitsprozeßstrategie zu vereinfachen. Hier und vorzugsweise betrifft dies die beiden Arbeitsprozessparameter "Durchsatz" und "Kraftstoffverbrauch", die sich zu den übrigen, hier genannten Arbeitsprozessparametern jeweils ähnlich verhalten. Entsprechend findet sich in dem Abbildungen ausschließlich der Arbeitsprozeßparameter "Durchsatz", der den Arbeitsprozeßparameter "Kraftstoffverbrauch" mit abbilden kann.

Die oben genannten Arbeitsprozeßparameter werden zur Klarstellung im Folgenden kurz erläutert: Bei dem Arbeitsprozessparameter "Bruchkornanteil" handelt es sich um den Anteil von Bruchkörnern des im Korntank 9 vorhandenen Korngutes. Bei dem Arbeitsprozessparameter "Ausdrusch" handelt es sich um den Anteil tatsächlich ausgedroschener Körner bezogen auf die insgesamt im Erntegut vorhandenen Körner. Bei dem Arbeitsprozessparameter "Durchsatz" handelt es sich um den durch den Mähdrescher durchlaufenden Volumenstrom von Erntegut. Der Arbeitsprozessparameter "Strohqualität" steht vorzugsweise dafür, inwieweit ein schonendes Dreschen stattfindet, so dass das Stroh nicht zerschlagen wird und möglichst wenig Kurzstroh oder zersplissenes Stroh entsteht. Dies ist in erster Linie für die Erzeugung und Ablage von Langstroh relevant.

Gleichmäßigkeit des vom Korngut getrennten Strohs. Der Arbeitsprozessparameter "Sauberkeit" steht dafür, wie weit das im Korntank 9 vorhandene Korngut frei von Nichtkornbestandteilen ist.

Dadurch, dass die Visualisierung der miteinander konkurrierenden Qualitätskriterien Q über die grafische Benutzerschnittstelle 14 vorgenommen wird, lassen sich in Abhängigkeit von der Maschinenkonfiguration und/oder der Steuerungskonfiguration und/oder dem Arbeitsprozesszustand unterschiedliche Qualitätskriterien Q visualisieren und benutzerseitig vorgeben. Hierdurch lassen sich die Eingabemöglichkeiten durch den Benutzer auf die jeweils vorliegende Situation zuschneiden, so dass die Wahrscheinlichkeit von Fehlbedienungen weiter reduziert wird.

Es sind nun verschiedene Möglichkeiten zur Umsetzung der jeweiligen Arbeitsprozessstrategie A denkbar. Im Speicher 11 sind bei dem in Fig. 2 dargestellten und insoweit bevorzugten Ausführungsbeispiel eine ganze Reihe von Arbeitsprozeßstrategien A₁-A₄ abgelegt. Hier und vorzugsweise ist die Rechenvorrichtung 12 dazu eingerichtet, zur Umsetzung der jeweils ausgewählten Arbeitsprozessstrategie A mindestens einen Maschinenparameter autonom zu ermitteln und dem jeweiligen Arbeitsorgan 2-5 vorzulegen. Auf diese Weise werden alle für die Arbeit der Arbeitsorgane 1-5 relevanten Größen umfassend untereinander koordiniert angesteuert. Es wird also insbesondere vermieden, dass von unterschiedlicher Seite konkurrierende und sich ggf. gegenseitig aushebelnde Ansteuerungen erfolgen.

Im Einzelnen ist es so, dass das Fahrerassistenzsystem 10 zur Erfüllung der Qualitätskriterien Q jeweils zugeordnete Steuermaßnahmen trifft, wobei das Fahrerassistenzsystem 10 zur Erfüllung miteinander konkurrierender Qualitätskriterien Q die zugeordneten Steuermaßnahmen gemäß der Gewichtungsvariable G zueinander gewichtet trifft. Bei dem oben genannten Beispiel der miteinander konkurrierenden Qualitätskriterien der Minimierung des Bruchkornanteils und der Maximierung des Ausdruschs müsste das Fahrerassistenzsystem 10 zur Erfüllung des ersten Qualitätskriteriums die Trommeldrehzahl der Dreschtrommel 6 reduzieren und zur Erfüllung des zweiten Qualitätskriteriums die Trommeldrehzahl der Dreschtrommel 6 erhöhen. Anhand der Gewichtungsvariable G erzeugt das Fahrerassistenzsystem 10 vorschlagsgemäß eine resultierende Steuermaßnahme. Im theoretisch einfachsten Fall ermittelt das Fahrerassistenzsystem 10 die resultierende Steuermaßnahme durch eine gewichtete Mittelung betreffend die jeweilige Veränderung der Trommeldrehzahl der Dreschtrommel 6. Die letztgenannten Zusammenhänge betreffend die Trommeldrehzahl dienen lediglich der Erläuterung der Gewichtungsvariable G. In der Praxis ist für die Erhöhung des Ausdruschs die Erhöhung der Trommeldrehzahl nach der Reduzierung der Korbweite nur die "zweite Wahl".

Nach einer weiteren Lehre, der eigenständige Bedeutung zukommt, wird ein Verfahren für die Ansteuerung der vorschlagsgemäßen landwirtschaftlichen Arbeitsmaschine beansprucht.

Wesentlich für das vorschlagsgemäße Verfahren ist, dass konkurrierende Qualitätskriterien Q gemäß einer Gewichtungsvariable G zueinander gewichtet in die Arbeitsprozessstrategie A eingehen und dass die Gewichtungsvariable über ein virtuelles Bedienelement 16-18 der grafischen Benutzerschnittstelle 14 visualisiert wird und benutzerseitig vorgegeben wird. Auf alle Ausführungen zu der Betriebsweise der vorschlagsgemäßen Arbeitsmaschine darf verwiesenwerden.

### Bezugszeichenliste

- 1: Schneidwerk
- 2: Dreschwerk
- 3: Abscheidevorrichtung
- 4: Reinigungsanordnung
- 5: Verteilanordnung
- 6: Dreschtrommel
- 7: Dreschkorb
- 8: Transportanordnung
- 9: Korntank
- 10: Fahrerassistenzsystem
- 11: Speicher
- 12: Rechenvorrichtung
- 13: Benutzer
- 14: Benutzerschnittstelle
- 15: Display
- 16-19: Bedienelement
- 20: Mittelstellung
- A: Arbeitsprozessstrategie
- Q: Qualitätskriterien (Q1-Q6)
- G: Gewichtsvariable (G1-G4)

## Patentansprüche

1. Landwirtschaftliche Arbeitsmaschine zur Abarbeitung eines landwirtschaftlichen Arbeitsprozesses, mit mehreren Arbeitsorganen (1-5) und mit einem Fahrerassistenzsystem (10) zur Ansteuerung der Arbeitsorgane (1-5) nach mindestens einer benutzerseitig vorgebbaren Arbeitsprozessstrategie (A), die auf die Erfüllung mindestens eines Qualitätskriteriums (Q) gerichtet ist, wobei das Fahrerassistenzsystem (10) einen Speicher (11) zum Hinterlegen von Daten und eine Rechenvorrichtung (12) zur Verarbeitung der in dem Speicher (11) hinterlegten Daten umfasst, wobei das Fahrerassistenzsystem (10) eine grafische Benutzerschnittstelle (14) aufweist, über die zumindest ein Teil der Arbeitsprozessstrategie (A) benutzerseitig vorgebbar ist,
**dadurch gekennzeichnet,**
**dass** konkurrierende Qualitätskriterien (Q) gemäß einer Gewichtungsvariable (G) zueinander gewichtet in die Arbeitsprozessstrategie (A) eingehen und dass die Gewichtungsvariable (G) über ein virtuelles Bedienelement (19) der grafischen Benutzerschnittstelle (14) visualisiert wird und benutzerseitig vorgebbar ist, wobei dem Bedienelement 19 drei Qualitätskriterien Q₁ - Q6 zugeordnet sind und die konkurrierenden Qualitätskriterien, zumindest "wenig Bruchkorn" Q1, "hoher Ausdrusch" Q2 und "hoher Durchsatz" Q4 umfassen wobei die konkurrierenden Qualitätskriterien (Q) so zu verstehen sind, dass die Erfüllung des einen Qualitätskriteriums (Q) der Erfüllung des anderen Qualitätskriteriums (Q) entgegenwirkt und umgekehrt.

2. Landwirtschaftliche Arbeitsmaschine nach Anspruch 1, **dadurch gekennzeichnet, dass** das Bedienelement (19) eine Mittelstellung (20) aufweist, die einer Gleichgewichtung der dem Bedienelement (19) zugeordneten, konkurrierenden Qualitätskriterien (Q) zueinander entspricht, vorzugsweise, dass eine Verstellung des Bedienelements 19) aus der Mittelstellung (20) heraus je nach Verstellrichtung eine Veränderung der Gewichtungsvariable (G) und damit der Gewichtung der Qualitätskriterien (Q) zueinander bewirkt.

3. Landwirtschaftliche Arbeitsmaschine nach einem der vorhergehenden Ansprüche, **dadurch gekennzeichnet, dass** die Gewichtungsvariable (G) über das virtuelle Bedienelement (19) mittels Drag-and-Drop-Bedienung verstellbar ist.

4. Landwirtschaftliche Arbeitsmaschine nach einem der vorhergehenden Ansprüche, **dadurch gekennzeichnet, dass** die benutzerseitige Verstellung des Bedienelements (19) proportional zu der Veränderung der Gewichtungsvariable (G) ist.

5. Landwirtschaftliche Arbeitsmaschine nach einem der vorhergehenden Ansprüche, **dadurch gekennzeichnet, dass** die Arbeitsmaschine (1) als Mähdrescher ausgestaltet ist und mehrere Arbeitsorgane (1-5) zum Verarbeiten von aufgenommenem Erntegut zu Korngut aufweist.

6. Landwirtschaftliche Arbeitsmaschine nach einem der vorhergehenden Ansprüche, **dadurch gekennzeichnet, dass** zwei konkurrierende Qualitätskriterien (Q₁, Q₂) die Einstellung oder Optimierung der Arbeitsprozeßparameter "Bruchkornanteil" und "Ausdrusch" sind, insbesondere, dass zwei konkurrierende Qualitätskriterien (Q₁, Q₂) die Minimierung des Arbeitsprozeßparameters "Bruchkornanteil" und die Maximierung des Arbeitsprozeßparameters "Ausdrusch" sind.

7. Landwirtschaftliche Arbeitsmaschine nach einem der vorhergehenden Ansprüche, **dadurch gekennzeichnet, dass** zwei konkurrierende Qualitätskriterien (Q₃, Q₄) die Einstellung oder Optimierung der Arbeitsprozeßparameter "Durchsatz" und "Sauberkeit" sind, insbesondere, dass zwei konkurrierende Qualitätskriterien (Q₃, Q₄) die Maximierung des Arbeitsprozeßparameters "Durchsatz" und die Maximierung des Arbeitsprozeßparameters "Sauberkeit" sind.

8. Landwirtschaftliche Arbeitsmaschine nach einem der vorhergehenden Ansprüche, **dadurch gekennzeichnet, dass** zwei konkurrierende Qualitätskriterien (Q₅, Q₆) die Einstellung oder Optimierung der Arbeitsprozeßparameter "Durchsatz" und "Strohqualität" sind, insbesondere, dass zwei konkurrierende Qualitätskriterien (Q₅, Q₆) die Maximierung des Arbeitsprozeßparameters "Durchsatz" und die Maximierung des Arbeitsprozeßparameters "Strohqualität" sind.

9. Landwirtschaftliche Arbeitsmaschine nach einem der vorhergehenden Ansprüche, **dadurch gekennzeichnet, dass** das Fahrerassistenzsystem (10) die Visualisierung der miteinander konkurrierenden Qualitätskriterien (Q) in Abhängigkeit von einer Maschinenkonfiguration und/oder einer Steuerungskonfiguration und/oder einem Arbeitsprozesszustand vornimmt.

10. Landwirtschaftliche Arbeitsmaschine nach einem der vorhergehenden Ansprüche, **dadurch gekennzeichnet, dass** die Rechenvorrichtung (12) dazu eingerichtet ist, zur Umsetzung der jeweils ausgewählten Arbeitsprozessstrategie (A) mindestens einen Maschinenparameter autonom zu ermitteln und dem jeweiligen Arbeitsorgan (2-5) vorzugeben.

11. Landwirtschaftliche Arbeitsmaschine nach einem der vorhergehenden Ansprüche, **dadurch gekennzeichnet, dass** das Fahrerassistenzsystem (10) zur Erfüllung der Qualitätskriterien (Q) jeweils zugeordnete Steuermaßnahmen trifft und dass das Fahrerassistenzsystem (10) zur Erfüllung miteinander konkurrierender Qualitätskriterien (Q) die zugeordneten Steuermaßnahmen gemäß der Gewichtungsvariable (G) zueinander gewichtet trifft.

12. Verfahren für die Ansteuerung einer landwirtschaftlichen Arbeitsmaschine (1) zur Abarbeitung eines landwirtschaftlichen Arbeitsprozesses, mit mehreren Arbeitsorganen (1-5) und mit einem Fahrerassistenzsystem (10) zur Ansteuerung der Arbeitsorgane (1-5) nach mindestens einer benutzerseitig vorgebbaren Arbeitsprozessstrategie (A), die auf die Erfüllung mindestens eines Qualitätskriteriums (Q) gerichtet ist, wobei das Fahrerassistenzsystem (10) eine grafische Benutzerschnittstelle (14) aufweist, über die zumindest ein Teil der Arbeitsprozessstrategie (A) benutzerseitig vorgegeben wird,
**dadurch gekennzeichnet,**
**dass** konkurrierende Qualitätskriterien (Q) gemäß einer Gewichtungsvariable (G) zueinander gewichtet in die Arbeitsprozessstrategie (A) eingehen und dass die Gewichtungsvariable (G) über ein virtuelles Bedienelement (19) der grafischen Benutzerschnittstelle (14) visualisiert wird und benutzerseitig vorgegeben wird, wobei dem Bedienelement 19 drei Qualitätskriterien Q₁ - Q6 zugeordnet sind und die konkurrierenden Qualitätskriterien, zumindest "wenig Bruchkorn" Q1, "hoher Ausdrusch" Q2 und "hoher Durchsatz" Q4 umfassen und wobei die konkurrierenden Qualitätskriterien (Q) so zu verstehen sind, dass die Erfüllung des einen Qualitätskriteriums (Q) der Erfüllung des anderen Qualitätskriteriums (Q) entgegenwirkt und umgekehrt.

## Claims

1. An agricultural working machine for executing an agricultural operating procedure, with a plurality of working units (1-5) and with a driver assistance system (10) for controlling the working units (1-5) in accordance with at least one operating procedure strategy (A) which can be specified by the operator and which is directed towards fulfilling at least one quality criterion (Q), wherein the driver assistance system (10) comprises a memory (11) for storing data and a processing device (12) for processing the data stored in the memory (11), wherein the driver assistance system (10) has a graphical operator interface (14) via which at least a part of the operating procedure strategy (A) can be specified by the operator,
**characterized in that**
competing quality criteria (Q) which are weighted with respect to each other in accordance with a weighting variable (G) are input into the operating procedure strategy (A), and **in that** the weighting variable (G) is visualised via a virtual operating element (19) of the graphical operator interface (14) and can be specified by the operator, wherein three quality criteria Q₁ - Q₆ are associated with the operating element (19) and the competing quality criteria comprise at least "low broken grain" Q_{1,} "high threshing yield" Q₂ and "high throughput" Q₄, wherein the quality criteria (Q) should be understood to be competing **in that** the fulfilment of one quality criterion (Q) counteracts the other quality criterion (Q), and vice versa.

2. The agricultural working machine according to claim 1, **characterized in that** the operating element (19) has a central position (20) which corresponds to an equal weighting between the competing quality criteria (Q) associated with the operating element (19), preferably **in that** a displacement of the operating element (19) out of the central position (20) acts to vary the weighting variable (G) and therefore the weighting of the quality criteria (Q) with respect to each other as a function of the displacement direction.

3. The agricultural working machine according to one of the preceding claims, **characterized in that** the weighting variable (G) can be displaced via the virtual operating element (19) using a drag-and-drop operation.

4. The agricultural working machine according to one of the preceding claims, **characterized in that** the displacement of the operating element (19) by the operator is proportional to the variation in the weighting variable (G).

5. The agricultural working machine according to one of the preceding claims, **characterized in that** the working machine (1) is configured as a combine harvester and has a plurality of working units (1-5) for processing harvested material which has been picked up into grain material.

6. The agricultural working machine according to one of the preceding claims, **characterized in that** two competing quality criteria (Q₁, Q₂) are the adjustment or optimisation of the "proportion of broken grain" and "threshing yield" operating procedure parameters, in particular **in that** two competing quality criteria (Q₁, Q₂) are minimizing the "proportion of broken grain" operating procedure parameter and maximizing the "threshing yield" operating procedure parameter.

7. The agricultural working machine according to one of the preceding claims, **characterized in that** two competing quality criteria (Q₃, Q₄) are the adjustment or optimisation of the "throughput" and "cleanliness" operating procedure parameters, in particular **in that** two competing quality criteria (Q₃, Q₄) are maximizing the "throughput" operating procedure parameter and maximizing the "cleanliness" operating procedure parameter.

8. The agricultural working machine according to one of the preceding claims, **characterized in that** two competing quality criteria (Q₅, Q₆) are the adjustment or optimisation of the "throughput" and "straw quality" operating procedure parameters, in particular **in that** two competing quality criteria (Q₅, Q₆) are maximizing the "throughput" operating procedure parameter and maximizing the "straw quality" operating procedure parameter.

9. The agricultural working machine according to one of the preceding claims, **characterized in that** the driver assistance system (10) carries out the visualisation of the mutually competing quality criteria (Q) as a function of a machine configuration and/or of a control configuration and/or of an operating procedure status.

10. The agricultural working machine according to one of the preceding claims, **characterized in that** in order to implement the respective selected operating procedure strategy (A), the processing device (12) is configured to determine at least one machine parameter autonomously and to provide it to the respective working unit (2-5).

11. The agricultural working machine according to one of the preceding claims, **characterized in that** in order to fulfil the quality criteria (Q), the driver assistance system (10) takes respectively associated control actions and **in that** in order to fulfil mutually competing quality criteria (Q), the driver assistance system (10) takes the associated control actions in accordance with the respective weighting of the weighting variable (G).

12. A method for controlling an agricultural working machine (1) for executing an agricultural operating procedure, with a plurality of working units (1-5) and with a driver assistance system (10) for controlling the working units (1-5) in accordance with at least one operating procedure strategy (A) which can be specified by the operator and which is directed towards fulfilling at least one quality criterion (Q), wherein the driver assistance system (10) has a graphical operator interface (14) via which at least a part of the operating procedure strategy (A) is specified by the operator,
**characterized in that**
competing quality criteria (Q) which are weighted with respect to each other in accordance with a weighting variable (G) are input into the operating procedure strategy (A), and **in that** the weighting variable (G) is visualised via a virtual operating element (19) of the graphical operator interface (14) and is specified by the operator, wherein three quality criteria Q₁ - Q₆ are associated with the operating element (19) and the competing quality criteria comprise at least "low broken grain" Q_{1,} "high threshing yield" Q₂ and "high throughput" Q₄, and wherein the quality criteria (Q) should be understood to be competing **in that** the fulfilment of one quality criterion (Q) counteracts the other quality criterion (Q), and vice versa.

## Revendications

1. Engin de travail agricole pour le traitement d'un processus de travail agricole, avec plusieurs organes de travail (1-5) et avec un système d'assistance au conducteur (10) pour la commande des organes de travail (1-5) selon au moins une stratégie de processus de travail (A) pouvant être prédéfinie côté utilisateur qui est dirigée sur le remplissage d'au moins un critère de qualité (Q), dans lequel le système d'assistance au conducteur (10) comporte une mémoire (11) pour enregistrer des données et un dispositif de calcul (12) pour le traitement des données enregistrées dans la mémoire (11), dans lequel le système d'assistance au conducteur (10) présente une interface utilisateur (14) graphique, par le biais de laquelle au moins une partie de la stratégie de processus de travail (A) peut être prédéfinie côté utilisateur,
**caractérisé en ce que**
des critères de qualité (Q) concurrents entrent pondérés les uns par rapport aux autres selon une variable de pondération (G) dans la stratégie de processus de travail (A) et que la variable de pondération (G) est visualisée par le biais d'un élément de commande (19) virtuel de l'interface utilisateur (14) graphique et peut être prédéfinie côté utilisateur, dans lequel à l'élément de commande 19 sont associés trois critères de qualité Q₁-Q6 et les critères de qualité concurrents comportent au moins « moins de grains cassés » Q1, « battage élevé » Q2 et « rendement élevé » Q4, dans lequel les critères de qualité (Q) concurrents sont à entendre de sorte que le remplissage d'un critère de qualité (Q) s'oppose au remplissage de l'autre critère de qualité (Q) et inversement.

2. Engin de travail agricole selon la revendication 1, **caractérisé en ce que** l'élément de commande (19) présente une position médiane (20) qui correspond à un équilibrage des critères de qualité (Q) concurrents, associés à l'élément de commande (19) les uns par rapport aux autres, de préférence qu'un réglage de l'élément de commande 19) depuis la position médiane (20) provoque selon le sens de réglage une modification de la variable de pondération (G) et ainsi de la pondération des critères de qualité (Q) les uns par rapport aux autres.

3. Engin de travail agricole selon l'une des revendications précédentes, **caractérisé en ce que** la variable de pondération (G) est réglable par le biais de l'élément de commande (19) virtuel au moyen de la commande Drag-and-Drop.

4. Engin de travail agricole selon l'une des revendications précédentes, **caractérisé en ce que** le réglage côté utilisateur de l'élément de commande (19) est proportionnel à la modification de la variable de pondération (G).

5. Engin de travail agricole selon l'une des revendications précédentes, **caractérisé en ce que** l'engin de travail (1) est configuré comme moissonneuse-batteuse et présente plusieurs organes de travail (1-5) pour le traitement de la récolte reçue en grains.

6. Engin de travail agricole selon l'une des revendications précédentes, **caractérisé en ce que** deux critères de qualité concurrents (Q₁, Q₂) sont le réglage ou l'optimisation des paramètres de processus de travail « part de grains cassés » et « battage», en particulier que deux critères de qualité (Q₁, Q₂) sont la minimisation du paramètre de processus de travail « part de grains cassés » et la maximisation du paramètre de processus de travail « battage».

7. Engin de travail agricole selon l'une des revendications précédentes, **caractérisé en ce que** deux critères de qualité (Q₃, Q₄) concurrents sont le réglage ou l'optimisation des paramètres de processus de travail « rendement » et « pureté » en particulier que deux critères de qualité (Q₃, Q₄) concurrents sont la maximisation du paramètre de processus de travail « rendement » et la maximisation du paramètre de processus de travail « pureté ».

8. Engin de travail agricole selon l'une des revendications précédentes, **caractérisé en ce que** deux critères de qualité (Q₅, Q₆) concurrents sont le réglage ou l'optimisation des paramètres de processus de travail « rendement » et « qualité de la paille », en particulier que deux critères de qualité (Q₅, Q₆) concurrents sont la maximisation du paramètre de processus de travail « rendement » et la maximisation du paramètre de processus de travail « qualité de la paille ».

9. Engin de travail agricole selon l'une des revendications précédentes, **caractérisé en ce que** le système d'assistance au conducteur (10) entreprend la visualisation des critères de qualité (Q) concurrents entre eux en fonction d'une configuration d'engin et/ou d'une configuration de commande et/ou d'un état de processus de travail.

10. Engin de travail agricole selon l'une des revendications précédentes, **caractérisé en ce que** le dispositif de calcul (12) est conçu afin de calculer de manière autonome pour la mise en œuvre de la stratégie de processus de travail (A) sélectionnée respectivement au moins un paramètre d'engin et de le prescrire à l'organe de travail (2-5) respectif.

11. Engin de travail agricole selon l'une des revendications précédentes, **caractérisé en ce que** le système d'assistance au conducteur (10) prend des mesures de commande respectivement associées pour le remplissage des critères de qualité (Q) et que le système d'assistance au conducteur (10) prend pour le remplissage de critères de qualité (Q) concurrents entre eux pondérés les uns par rapport aux autres les mesures de commande associées selon la variable de pondération (G).

12. Procédé pour la commande d'un engin de travail agricole (1) pour le traitement d'un processus de travail agricole, avec plusieurs organes de travail (1-5) et avec un système d'assistance au conducteur (10) pour la commande des organes de travail (1-5) selon au moins une stratégie de processus de travail (A) pouvant être prédéfinie côté utilisateur qui est dirigée sur le remplissage au moins d'un critère de qualité (Q), dans lequel le système d'assistance au conducteur (10) présente une interface utilisateur (14) graphique, par le biais de laquelle au moins une partie de la stratégie de processus de travail (A) est prédéfinie côté utilisateur, **caractérisé en ce que**
des critères de qualité (Q) concurrents entrent pondérés les uns par rapport aux autres selon une variable de pondération (G) dans la stratégie de processus de travail (A) et que la variable de pondération (G) est visualisée par le biais d'un élément de commande (19) virtuel de l'interface utilisateur (14) graphique et est prédéfinie côté utilisateur, dans lequel à l'élément de commande 19 sont associés trois critères de qualité Q₁-Q6 et les critères de qualité concurrents, comportent au moins « moins de grains cassés » Q1, « battage élevé » Q2 et « rendement élevé » Q4 et dans lequel les critères de qualité (Q) concurrents sont à entendre de sorte que le remplissage d'un critère de qualité (Q) s'oppose au remplissage de l'autre critère de qualité (Q) et inversement.
